# DEMANDE DE BREVET EUROPEEN

(11) **EP 2 450 816 A1**
(43) Date de publication de la demande: **09.05.2012**
(21) Numéro de dépôt: 10306148.7
(22) Date de dépôt: 21.10.2010
(51) Int. Cl.: G06F 21/00

(54) **Procédé de sécurisation de l'exécution d'un code informatique par redondance dynamique**

(71) Demandeur: Gemalto SA, 92190 Meudon (FR)
(72) Inventeur: Villegas Karine, 13420, Gemenos (FR); Gauteron Laurent, 13700 Marignane (FR)

(57) **Abrégé**

L'invention propose un procédé de sécurisation de l'exécution d'un code informatique par redondance de tout ou partie des fonctions exécutées.

Le point de départ de la redondance ainsi que le sens de la redondance étant définis de manière dynamique.

## Description

La présente invention concerne le domaine de la sécurisation et de la protection de l'exécution d'un code informatique par une unité de traitement d'un équipement électronique, ainsi que les dispositifs associés, par exemple des cartes à puce.

Les cartes à puce font l'objet de nombreuses tentatives de piratage, par des attaques actives ou passives. Une attaque active consiste à injecter une faute pour perturber physiquement le circuit intégré de la puce en vue de modifier le comportement de cette dernière et de dérouter le code logiciel vers un autre type d'exécution.

En contraste, pour une attaque passive, par exemple par canal latéral (side-channel), le pirate tente de réaliser une analyse statistique de grandeurs mesurables de la puce tels que le courant d'alimentation électrique ou les radiations électromagnétiques émises par la puce, afin de maîtriser ou déduire les tâches d'exécution de la puce.

Afin de palier à de telles attaques, il est connu d'utiliser et d'insérer, lors de l'exécution d'une commande, des délais aléatoires, c'est-à-dire des délais dont la durée est choisie de façon aléatoire ou pseudo-aléatoire, comme contre-mesure à de telles attaques afin de les rendre plus complexes à réaliser. En effet, la présence de ces délais aléatoires rend délicate la détermination de l'instant auquel la faute doit être injectée par le pirate lors de l'exécution d'un processus et empêche le pirate de se synchroniser pour réaliser des mesures par canal latéral.

Dans la présente description et dans les revendications, on entendra par « code source », une séquence d'instructions exécutables formant tout ou partie d'une application informatique.

De la même façon, on entendra par « code exécuté », une séquence d'instructions réellement jouées par le processeur lors de l'exécution de tout ou partie de l'application correspondante.

Il est connu d'insérer, dans le code source, des portions de code dont le résultat n'est pas nécessaire à l'exécution normale du code en question. Ces portions de codes sont généralement appelées « leurres ». Ces leurres ont comme particularité, lors d'une analyse side-channel, de ressembler à de vraies séquences importantes de code.

De telles contre-mesures (leurres ou délais aléatoires) ont comme objectif commun de rendre les attaques extérieures plus difficiles en empêchant le pirate de comprendre et/ou de prédire avec précision l'exécution du programme.

Il est fréquent d'insérer de telles contre-mesures à de multiples emplacements temporels durant l'exécution d'un code source par la puce. Notamment, il a été pensé de sécuriser l'exécution d'opérations délicates ou à risques (telles qu'une lecture/écriture en mémoire, un calcul cryptographique, un algorithme de prise de décision) avec de telles contre-mesures. En effet, ces opérations délicates étant les plus sollicitées par les pirates, il apparaît judicieux d'insérer de nombreuses contre-mesures tout au long de l'exécution du code source, avant et pendant de telles opérations délicates.

Un inconvénient de cette solution est qu'il est possible de repérer la présence de ces contre-mesures lors d'analyses par canal latéral, malgré les efforts pour les rendre les moins visibles possibles. Ces contre-mesures étant généralement positionnées près des séquences critiques de code source, leur détection peut permettre de caler les attaques au plus près des points cruciaux.

La présente invention vise à résoudre cet inconvénient en proposant de faire varier le code exécuté d'une exécution à l'autre au travers de redondances, et de vérifications de résultats intermédiaires.

Pour cela, l'invention consiste en un procédé de sécurisation de l'exécution d'un code informatique par un microprocesseur, ce code informatique étant divisé en fonctions élémentaires, l'exécution comprenant l'utilisation d'un compteur, dit NC, mis à jour après l'exécution de chaque fonction élémentaire, au moins deux variables de sécurisation r0 et r1. Ce procédé comporte au moins les étapes de :
- initialisation des variables de sécurisation
- identification du point de redondance, après chaque incrémentation du compteur NC, une fonction de comparaison FC est appliquée à ce compteur NC et à la variable r0, lorsque la fonction de comparaison FC retourne un succès, déclanchement de l'étape de redondance.
- redondance, application d'une fonction booléenne « SENS » à la variable r1,
- en fonction de la valeur de retour de la fonction SENS, lancement de la fonction « redondance arrière », ou lancement de la fonction « redondance avant »
- reprise de l'exécution des fonctions élémentaires restant éventuellement à exécuter.

Selon un mode de réalisation, la fonction « redondance arrière » peut comprendre au moins les étapes de :
- calcul d'une valeur CHK0 à partir des résultats de tout ou partie des fonctions élémentaires exécutées dits « sous ensemble redondé »,
- réexécution des fonctions élémentaires composant cet « sous ensemble redondé », formant un nouvel ensemble dit « sous ensemble redondant »,
- calcul d'une valeur CHK1, à partir des résultats des fonctions élémentaires du « sous ensemble redondé »,
- application d'une fonction de comparaison COMP aux valeurs CHK0 et CHK1.

Selon un mode de réalisation, la fonction « redondance avant » peut comprendre au moins les étapes de :
- exécution de tout ou partie des fonctions élémentaires restant à exécuter dits « sous ensemble redondé »,
- calcul d'une valeur CHK0 à partir des résultats des fonctions élémentaires composant le « sous ensemble redondé »
- réexécution des fonctions élémentaires composant le « sous ensemble redondé », formant un nouvel ensemble dit « sous ensemble redondant »,
- calcul d'une valeur CHK1, a partir des résultats des fonctions élémentaires du « sous ensemble redondé »,
- application d'une fonction de comparaison COMP aux valeurs CHK0 et CHK1.

Selon un mode d'implémentation, la variable r0 peut être initialisée avec un entier aléatoire inférieur ou égal au nombre total de fonctions élémentaires composant le code informatique.

Selon un mode d'implémentation, la variable r1 peut être initialisée avec une valeur booléenne aléatoire.

Selon un mode d'implémentation, le procédé peut comporter en outre une variable r2, initialisée durant l'étape de redondance telle que,
- si la valeur de retour de la fonction « SENS » déclenche une redondance arrière, alors la variable r2 est initialisée avec un entier aléatoire inférieur ou égal au nombre de fonctions élémentaires exécutées,
- si la valeur de retour de la fonction « SENS » déclenche une redondance avant, alors la variable r2 est initialisée avec un entier aléatoire inférieur ou égal au nombre de fonctions élémentaires restant à exécuter.

Dans ce cas, dans la fonction « redondance arrière » le « sous ensemble redondé » est défini par les r2 dernières fonctions élémentaires exécutées. De même, dans la fonction « redondance avant » le « sous ensemble redondé » est défini par les r2 fonctions élémentaires suivantes exécutées.

Selon le mode d'implémentation, la fonction FC peut être la fonction « égalité ».

Selon le mode d'implémentation, la fonction « SENS » est une fonction qui a une équiprobabilité de déclencher une redondance avant, ou une redondance arrière. Ainsi, la fonction « SENS » peut déclencher une redondance avant si r1 est égal à 1, et déclencher une redondance arrière r1 est égal à 0.

D'autres caractéristiques et avantages de l'invention ressortiront clairement de la description qui en est faite ci-après, à titre indicatif et nullement limitatif, en référence aux dessins annexés dans lesquels :
- La figure 1 représente les fonctions élémentaires insérées qui composent un code de référence
- La figure 2 représente un premier exemple de code exécuté lorsque la présente invention est appliquée au code de la figure 1
- La figure 3 représente un second exemple de code exécuté lorsque la présente invention est appliquée au code de la figure 1
- La figure 4 représente un troisième exemple de code exécuté lorsque la présente invention est appliquée au code de la figure 1

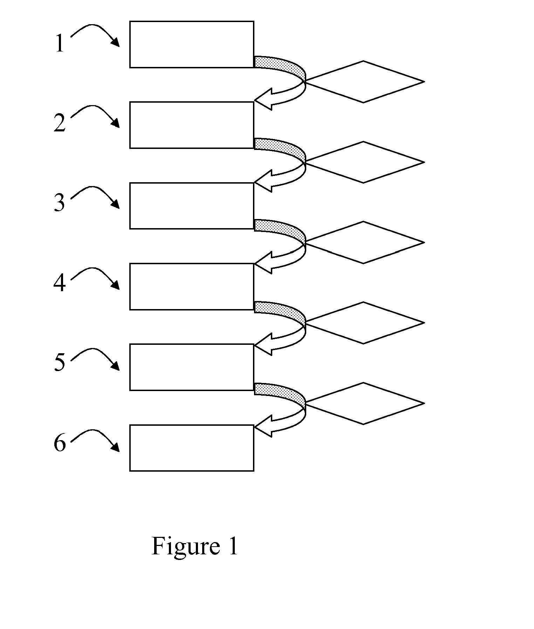

L'invention propose de protéger un code informatique contre différentes attaques, notamment les attaques par faute. Ce code, illustré et détaillé dans les figures 1 à 4, peut composer un programme, ou bien un morceau de programme. Dans la majorité des implémentations, la présente invention est appliquée à une portion de code dite sensible. Pour être applicable à l'invention, le code doit être fragmentable. Dans la présente description, ces fragments sont appelés fonctions élémentaires.

Ces fonctions élémentaires peuvent correspondre à une opération du processeur, voire un groupe d'opérations. Dans un mode préféré, chacune des fonctions élémentaires est la plus petite possible, par exemple une opération du processeur.

Lors de l'exécution, le processeur utilisera un compteur NC. Ce compteur, aussi appelé compteur d'exécution, varie d'une valeur de référence à un nombre fini supérieur au nombre de fonctions élémentaires totales à exécuter. A chaque fois qu'une des fonctions élémentaires est exécutée, il est mis à jour. Il permettra ainsi d'une part d'identifier des instants dans l'exécution où il sera possible d'appliquer le mécanisme présenté et d'autre part de se repérer dans le code au cours de l'exécution des fonctions élémentaires.

L'invention propose, lors de l'exécution du code, de déclencher des redondances plus ou moins grandes, à des moments imprévisibles de l'exécution du code.

A cette fin, l'invention prévoit l'utilisation d'au moins 2 variables r0 et r1. Ces deux variables vont permettre de définir le point de démarrage de la redondance, ainsi que son sens.

En effet, une fois un point de redondance défini, il est possible de répéter les opérations qui viennent d'être exécutées, ou bien celles qui vont suivre. C'est là qu'intervient le sens.

Ainsi la variable r0 permet de définir le point de démarrage de la redondance. Cette variable associée au compteur d'exécution devra permettre d'identifier un point situé dans le déroulement de l'exécution du code.

En effet, si, dans un mode préféré, la variable r0 doit avoir une valeur inférieure ou égale au nombre total de fonctions élémentaires qui composent le code à exécuter, il est parfaitement possible d'affecter à la variable r0 une valeur aléatoire, et ensuite de lui appliquer une fonction qui permette de ramener cette valeur à un nombre inférieur ou égal au nombre total de fonctions élémentaires, par exemple en utilisant la fonction modulo.

La fonction modulo représente le reste de la division entière. Soient *a* et *n* ∈ Z , on a *a* = *n.* x *q + r* où on peut noter *r = a* mod *n* avec mod représentant la fonction modulo.

La variable r1 est une variable qui va permettre de définir le sens de la redondance.

Cette variable va donc être analysée par une fonction SENS qui retourne un booléen. La fonction SENS est directement liée à la taille de la variable r1. En effet, si la variable r1 est elle même un booléen, alors la fonction SENS peut se contenter d'être une fonction identité : si r1 est égal à 1, alors la fonction retourne 1, si r1 a une valeur égale à 0, alors elle retourne 0.

Dans une mode préféré, la variable r1 peut prendre n'importe quelle valeur entière, la fonction SENS, dans ce cas là, permet de renvoyer, de manière équiprobable une valeur booléenne, après avoir analysé r1. Une solution peut par exemple se baser sur la parité de r1, ou bien sur le poids de Hamming, etc.

Le choix du sens en fonction de la valeur de retour de la fonction SENS est un choix purement arbitraire. Dans les exemples ci après, il a été décidé d'associer la valeur 1 à une redondance arrière, et la valeur 0 à une redondance avant, ceci n'est qu'a titre d'exemple, et nullement limitatif. Un mode d'implémentation selon l'invention consiste à définir des variables AV et AR, et si la fonction SENS retourne une valeur égale à la variable AV, alors on est en présence d'une redondance avant, si la valeur de retour est égale à la valeur AR, on est en présence d'une redondance arrière. Les initialisations de telles variables peuvent avantageusement se faire de manière aléatoire.

Les deux variables r0 et r1 doivent être initialisées.

Dans un mode préféré, cette initialisation peut se faire avant l'exécution de la première fonction élémentaire, dans une étape commune d'initialisation. Cette étape peut avantageusement initialiser également le compteur NC à 0 ou à toute autre valeur entière prédéfinie.

Ces initialisations peuvent se faire au cours de l'exécution du code, auquel cas l'invention s'applique au code restant à exécuter.

Dans un autre mode d'initialisation, seule la variable r0 est initialisée en début de code, la variable r1 devant uniquement être initialisée avant le déclenchement de la redondance, son initialisation peut être repoussée jusque là, voire même être faite juste au moment de la redondance.

L'initialisation de r0 et de r1 peut se faire de plusieurs manières. La manière préférée consiste à utiliser des valeurs aléatoires. Toutefois, des solutions peuvent limiter cet aléa, voire faire des initialisations déterministes.

Ces initialisations sont particulièrement adaptées à des systèmes réactifs. Ces systèmes permettent de faire varier les mécanismes de sécurité appliqués à un code ou un dispositif en fonction de valeurs, relevées par mécanismes de détections.

Par exemple, si un mécanisme de détection détecte une situation à risque, par exemple au travers d'une succession d'opérations erronées, ou d'un capteur physique, il est possible de faire varier des paramètres. De même, si de tels mécanismes de détection ont été activés lors de l'exécution précédente de ce code, ou d'un autre, il est possible de faire varier ces paramètres. Dans un autre modèle, si les conditions d'exécutions répondent à des critères particuliers, il est envisageable de définir des paramètres baissant légèrement la sécurité. Par exemple si le code est exécuté dans un environnement reconnu comme étant sécurisé.

Dans ces conditions il est envisageable d'initialiser les variables r0 et r1 avec des aléas bornés, ou bien avec des valeurs calculées par une fonction adaptée.

La figure 1 illustre l'exécution d'un code informatique, divisé en 6 fonctions élémentaires (1, 2, 3, 4, 5, 6). Apres l'exécution de chacune des fonctions, le compteur NC est incrémenté (11, 12, 13, 14, 15).

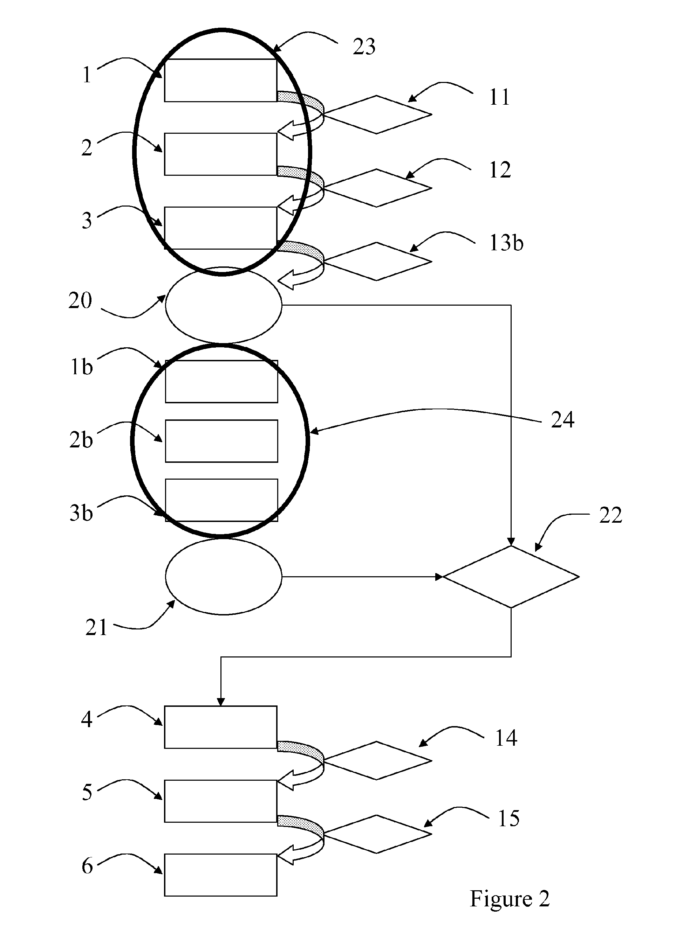

Dans la figure 2, le même code est exécuté avec, cette fois, la présente invention.

Dans une étape préalable, la variable r0 a reçu la valeur 3, et la variable r1 a reçu la valeur 0.

L'exécution des fonctions élémentaires se fait de la même manière que dans la figure 1, à ceci près que, après chaque mise à jour du compteur NC, une fonction de comparaison FC est appliquée à NC et à r0 (11, 12, 13, 14, 15). Cette fonction peut, par exemple être la fonction identité, ainsi, si r0 égale NC, alors la fonction retourne vrai (TRUE en anglais) ou 1, et déclenche la redondance. La fonction FC peut être toute fonction de comparaison de nombres, par exemple « supérieur » , « inférieur », « supérieur ou égal », « inférieur ou égal », ...

Dans le mode d'implémentation illustré par la figure 2, la fonction FC est la fonction égalité.

Le processeur exécute la première fonction élémentaire (1), le compteur NC est incrémenté, passe à 1. La fonction FC compare (11) r0 (égale à 3) avec NC (égale à 1) et retourne faux (0, ou false en anglais)

Le processeur exécute la seconde fonction élémentaire, le compteur NC est incrémenté, passe à 2. La fonction FC compare (12) r0 (égale à 3) avec NC (égale à 2) et retourne faux (0, ou false en anglais)

Le processeur exécute la troisième fonction élémentaire, le compteur NC est incrémenté, passe à 3. La fonction FC compare (13b) r0 (égale à 3) avec NC (égale à 3) et retourne vrai 11, ou true en anglais). Cette valeur de retour de la fonction FC est le signal pour le déclanchement de la redondance selon l'invention.

La valeur de r1 est analysée, ici r1 vaut 0, la redondance est donc une redondance dite « arrière », ce sont donc les fonctions déjà exécutées qui sont exécutées à nouveau, à savoir les fonctions élémentaires 1, 2 et 3.

Le programme exécute alors un calcul (20) qui permet de produire une valeur de contrôle, dite CHK0. Cette valeur, aussi appelée résultat intermédiaire, est produite grâce aux informations générées par la première réalisation des fonctions élémentaires déjà exécutées (1, 2, 3), dans cet exemple, les trois premières.

La valeur de contrôle CHK0 sera définie en fonction du contexte. Elle pourra correspondre à une donnée calculée, à un contenu de registres ou de mémoire, à un état de la pile ... Elle est le garant d'un état lié aux éléments à protéger à un instant donné.

Une fois cette redondance faite (24), une nouvelle valeur de contrôle CHK1 est calculée (21) en fonction des résultats des fonctions élémentaires rejouées (1b, 2b, 3b) durant la redondance.

Les deux valeurs CHK0 et CHK1 sont comparées (22). Si elles sont identiques, alors l'exécution reprend son cours normal avec les fonctions élémentaires restant à exécuter (4, 5, 6).

Ces opérations de redondance permettent de vérifier qu'aucune erreur ne s'est produite durant la première exécution des fonctions redondées, ni durant leur redondance.

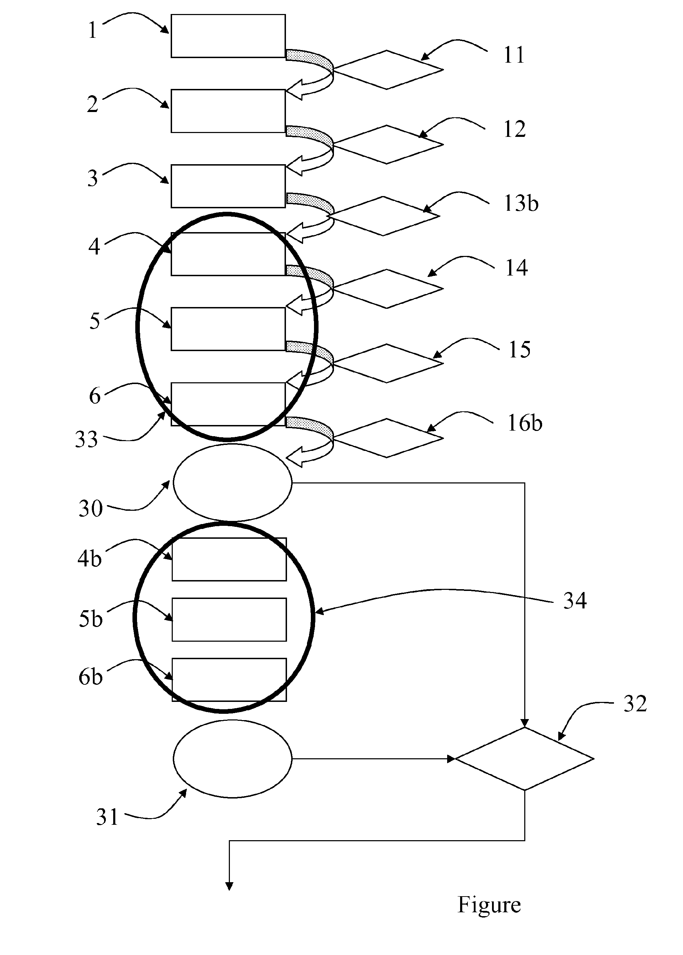

La figure 3 illustre l'exécution du code informatique de la figure 1, mais avec une implémentation de l'invention dans laquelle la variable r1 reçoit la valeur 3, et la variable r1 reçoit la valeur 1. Nous sommes donc dans le cas d'une redondance avant, après la 3eme fonction élémentaire.

La détection du point de redondance se fait de la même manière que dans la figure 2. Une fois le point de redondance identifié (13b), le processeur exécute l'ensemble des fonctions élémentaires lui restant à effectuer (4, 5, 6), puis, avant de terminer le code, calcule (30) une valeur de contrôle CHK0 à partir des résultats des opérations exécutées depuis le point de redondance identifié (13b), dans notre cas à partir des 3 dernières opérations exécutées, puis rejoue (4b 5b 6b) ces même 3 opérations, et calcule (31) un nouvelle valeur CHK1 à partir des résultats de ces opérations rejouées.

Si la comparaison (32) de CHK0 et de CHK1 est correcte, alors le programme se termine normalement.

Dans tous les modes de réalisations de l'invention, un échec dans la comparaison de CHK0 et de CHK1 met en évidence un disfonctionnement. Le traitement d'un tel disfonctionnement peut être réalisé par l'ensemble des solutions connues de l'homme de l'art, et ne fait pas l'objet du présent brevet. Il est notamment possible d'interrompre l'exécution du code, de modifier les valeurs produites, d'effacer des zones mémoire, d'envoyer un message vers un port de communication, de mettre a jour une zone mémoire ...

Dans un mode particulièrement intéressant de l'invention, une autre variable, r2, est utilisée. Cette variable va définir la profondeur de la redondance. Cela représente le nombre d'opérations à redonder. Dans le mode illustré par la figure 2, la redondance arrière comprend toutes les fonctions élémentaires situées entre l'initialisation de r0 et le point de redondance, dans le mode illustré par la figure 3, la redondance avant comprend toutes les opérations restant à exécuter après le point de redondance.

Dans ce mode, le nombre d'opération à redonder va donc dépendre de la valeur de r2. Dans un mode arrière, il faut que la valeur de r2 puisse être ramenée à une valeur inférieure ou égale au nombre d'opérations déjà exécutées, et dans le cas d'une redondance avant, r2 doit pouvoir être ramené à une valeur inférieure ou égale au nombre d'opérations restant à exécuter. Ce mode d'implémentation de l'invention nécessite la connaissance précise du nombre total d'opérations a exécuter. L'initialisation de r2 peut se faire avantageusement selon un mode aléatoire, ou, tout comme les variables r0 et r1, dans un mode d'aléa borné, voire déterministe. L'initialisation de r2 est particulièrement adaptée au mode réactif, tel que défini ci-avant.

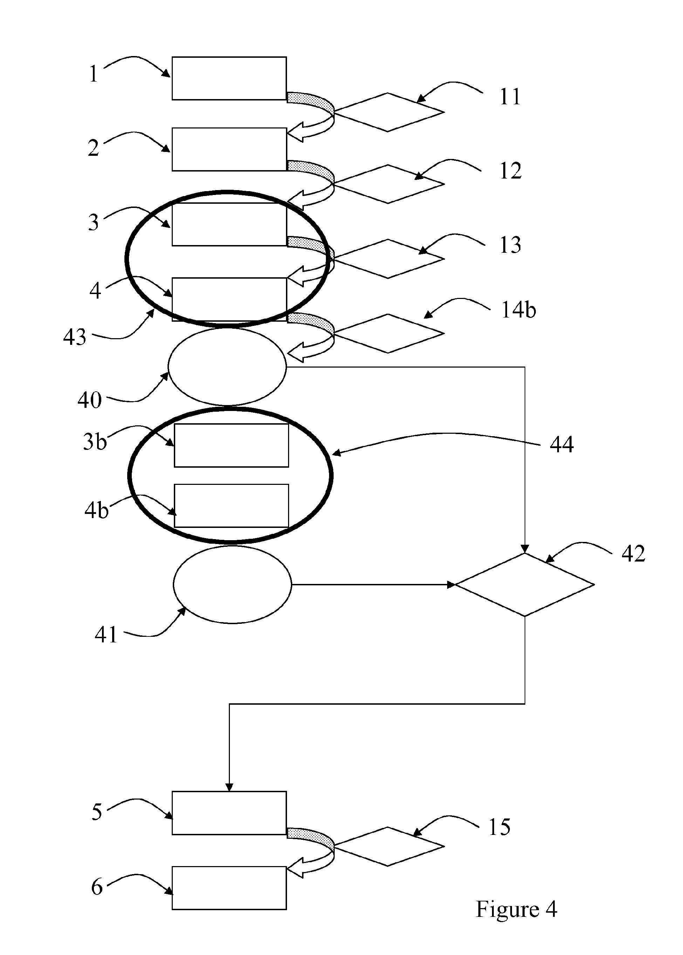

Dans ce mode d'implémentation, illustré par la figure 4, l'initialisation de r2 a lieu après l'initialisation de r0 et de r1. La variable r0 reçoit la valeur 4, la variable r1 reçoit la valeur 0. Nous sommes donc dans le cas d'une redondance arrière déclenchée après la 4ème fonction élémentaire, la variable r2 reçoit donc une valeur aléatoire comprise entre 1 et 4, ici 2.

Dans un autre mode d'implémentation, r2 peut recevoir une valeur complètement aléatoire, et cela indépendamment des initialisations de r0 et de r1, et au moment de la redondance, la valeur de r2 est étudié, selon le sens, modulo les opérations exécutées, ou modulo le nombre d'opérations restant à exécuter.

Lors du déclenchement de la redondance (14b), conformément aux modes d'implémentations précédents, la valeur de CHK0 est calculée (40) cette fois à partir des deux dernières opérations exécutées (car r2 égale 2), ces deux opérations sont ré-exécutées (3b, et 4b), et la valeur de CHK1 est calculée (41) a partir des résultats de ces deux opérations rejouées.

La suite du procédé selon l'invention reste inchangée.

Un autre mode, particulièrement adapté aux codes informatiques longs, peut consister en l'utilisation d'une pluralité de variable r0, r1, voire de r2.

En effet, dans un tel mode, plusieurs valeurs r0 vont définir autant de points de redondance au cours de l'exécution du code. Il est possible d'affecter à chacun de ces points une valeur r1 et ainsi un sens, ou bien d'avoir un sens commun à toutes les redondances de l'exécution, auquel cas un seul r1 peut suffire.

Dans ce mode, il est avantageux de considérer les redondances sur des portions de code comprises entre deux points de redondance, notamment dans le cas où un paramètre r2 est défini, pour chacun des points de redondance.

Dans ce mode d'utilisation, après chaque exécution d'une fonction élémentaire, la valeur du compteur Nc est comparée à chacune des valeurs de r0 afin de déclencher ou non une redondance.

Nous noterons que le compteur NC ne doit pas être affecté par les redondances. Pour cela, il existe plusieurs solutions, comme illustré par les figures 2,3 ,4, il est possible d'informer les processeurs que les opérations exécutées dans le cadre de la redondance ne doivent pas affecter la valeur du compteur NC. Une autre solution peut consister en une mise à jour du compteur NC durant les redondances, et, avant de reprendre le cours normal des exécutions des fonctions élémentaires restant à exécuter, d'annuler ces mises à jour.

Dans le cas ou la mise à jour du compteur NC se fait par incrémentation, l'annulation peut se faire, après la redondance, par la soustraction, à la valeur du compteur NC, du nombre de fonctions redondées.

## Revendications

1. Procédé de sécurisation de l'exécution d'un code informatique par un microprocesseur, ledit code informatique étant divisé en fonctions élémentaires (1, 2, 3, 4, 5, 6), ladite exécution comprenant l'utilisation d'un compteur, dit NC, mis à jour (11, 12, 13, 14, 15) après l'exécution de chaque dite fonction élémentaire, au moins deux variables de sécurisation r0 et r1, **caractérisé en ce qu'**il comporte au moins les étapes de :
- Initialisation des variables de sécurisation
- Identification du point de redondance, après chaque incrémentation dudit compteur NC, une fonction de comparaison FC est appliquée audit compteur NC et à ladite variable r0, lorsque ladite fonction de comparaison FC retourne un succès, déclanchement de l'étape de redondance.
- Redondance, application d'une fonction booléenne
« SENS » à ladite variable r1,
- En fonction de la valeur de retour de ladite fonction SENS, lancement de la fonction « redondance arrière », ou lancement de la fonction « redondance avant »
- Reprise de l'exécution desdites fonctions élémentaires restant éventuellement à exécuter.

2. Procédé selon la revendication 1 **caractérisé en ce que** ladite fonction « redondance arrière » comprend au moins les étapes de :
- Calcul (20, 30, 40) d'une valeur CHK0 à partir des résultats de tout ou partie desdites fonctions élémentaires exécutées dits « sous ensemble redondé » (23, 33, 43),
- réexécution desdites fonctions élémentaires composant ledit « sous ensemble redondé », formant un nouvel ensemble dit « sous ensemble redondant » (24, 34, 44),
- calcul (21, 31, 41) d'une valeur CHK1, à partir des résultats des fonctions élémentaires dudit « sous ensemble redondé »,
- application d'une fonction de comparaison COMP aux valeurs CHK0 et CHK1 (22, 32, 42).

3. Procédé selon la revendication 1 **caractérisé en ce que** ladite fonction « redondance avant » comprend au moins les étapes de :
- exécution de tout ou partie des fonctions élémentaires restant à exécuter dits « sous ensemble redondé » (23, 33, 43),
- calcul (20, 30, 40) d'une valeur CHK0 a partir des résultats des fonctions élémentaires composant ledit « sous ensemble redondé »
- réexécution desdites fonctions élémentaires composant ledit « sous ensemble redondé », formant un nouvel ensemble dit « sous ensemble redondant » (24, 34, 44),
- calcul (21, 31, 41) d'une valeur CHK1, a partir des résultats des fonctions élémentaires dudit « sous ensemble redondé »,
- application d'une fonction de comparaison COMP aux valeurs CHK0 et CHK1 (22, 32, 42).

4. Procédé selon la revendication 1, **caractérisé en ce que** la variable r0 est initialisée avec un entier aléatoire inférieur ou égal au nombre total de fonctions élémentaires composant ledit code informatique.

5. Procédé selon la revendication 1, **caractérisé en ce que** la variable r1 est initialisée avec une valeur booléenne aléatoire.

6. Procédé selon la revendication 1, **caractérisé en ce qu'**il comporte en outre une variable r2, initialisée durant ladite étape de redondance telle que,
- si la valeur de retour de ladite fonction « SENS » déclenche une redondance arriere, alors ladite variable r2 est initialisée avec un entier aléatoire inférieur ou égal au nombre de fonctions élémentaires exécutées,
- si la valeur de retour de ladite fonction « SENS » déclenche une redondance avant, alors ladite variable r2 est initialisée avec un entier aléatoire inférieur ou égal au nombre de fonctions élémentaires restant à exécuter.

7. Procédé selon la revendication 6, **caractérisé en ce que**, dans ladite fonction « redondance arrière » ledit « sous ensemble redondé » est défini par les r2 dernières fonctions élémentaires exécutées.

8. Procédé selon la revendication 6, **caractérisé en ce que**, dans ladite fonction « redondance avant » ledit
« sous ensemble redondé » est défini par les r2 fonctions élémentaires suivantes exécutées.

9. Procédé selon l'une des revendications 2 à 5, **caractérisé en ce que** ladite fonction FC est la fonction « égalité ».

10. Procédé selon l'une des revendications 1 à 5, **caractérisé en ce que** ladite fonction « SENS » est une fonction qui a une équiprobabilité de déclencher une redondance avant, ou une redondance arrière.

11. Procédé selon la revendication 10, **caractérisé en ce que** ladite fonction « SENS » déclencher une redondance avant si r1 est égal à 1, et déclencher une redondance arrière r1 est égal à 0.
